# EUROPÄISCHE PATENTSCHRIFT

(11) **EP 0 990 578 B1**
(45) Veröffentlichungstag und Bekanntmachung des Hinweises auf die Patenterteilung: **27.02.2002**
(21) Anmeldenummer: 99111182.4
(22) Anmeldetag: 09.06.1999
(51) Int. Cl.: B62D 25/14

(54) **Verfahren zum Herstellen eines Querträgers sowie derartiger Querträger**
Cross-beam and process for manufacturing such a cross-beam
Procédé pour la fabrication d'une traverse et une telle traverse

(30) Priorität: 01.10.1998 DE 19845146
(43) Veröffentlichungstag der Anmeldung: 05.04.2000
(73) Patentinhaber: Progress-Werk Oberkirch Aktiengesellschaft, 77704 Oberkirch (DE)
(72) Erfinder: Schmieder, Hansjörg, 77704 Oberkirch-Zusenhofen (DE); Merkle, Hans, 79346 Endingen (DE)
(74) Vertreter: Heuckeroth, Volker, Dr.

(56) Entgegenhaltungen:
- DE-A- 4 232 846
- US-A- 4 432 565
- US-A- 5 295 708
- PATENT ABSTRACTS OF JAPAN vol. 1996, no. 11, 29. November 1996 (1996-11-29) & JP 08 183478 A (FUTABA SANGYO KK), 16. Juli 1996 (1996-07-16)

## Beschreibung

Die Erfindung betrifft ein Verfahren zum Herstellen eines Querträgers zur Aussteifung einer Instrumententafel eines Kraftfahrzeuges, wobei der herzustellende Querträger zumindest zwei in axialer Verlängerung angeordnete Profilabschnitte voneinander unterschiedlichen Querschnitts aufweist, wobei der Profilabschnitt kleineren Querschnitts über zumindest eine Teillänge mit dem Profilabschnitt größeren Querschnitts überlappend angeordnet ist.

Die Erfindung betrifft ferner einen derartigen Querträger.

Ein solches Verfahren sowie ein derartiger Querträger sind aus der US-A-4 432 565 bekannt.

Querträger werden in der Automobilindustrie im Karosseriebau verwendet. Als Teil einer Kraftfahrzeugkarosserie ist der Querträger zwischen den sogenannten A-Säulen im Bereich unterhalb der Windschutzscheibe etwa horizontal verlaufend angeordnet. Der Querträger dient zur Befestigung der Instrumententafel, wobei dem Querträger außerdem die Aufgabe zukommt, die Instrumententafel, die üblicherweise aus Kunststoff- und/oder Holzteilen besteht, auszusteifen. An dem Querträger sind Halterungen vorgesehen, an denen die Instrumententafel, ferner eventuell eine Mittelkonsole und die Lenkeinrichtung befestigt werden.

Querträger zur Aussteifung der Instrumententafel eines Kraftfahrzeuges werden üblicherweise mit über die Länge des Querträgers nicht gleichmäßigem Profilquerschnitt hergestellt. Mit anderen Worten weisen solche Querträger zumindest zwei in axialer Verlängerung angeordnete Profilabschnitte auf, die voneinander unterschiedliche Profilquerschnitte aufweisen. Einer der Profilabschnitte weist einen kleineren Querschnitt auf, während der andere Profilabschnitt einen größeren Querschnitt besitzt. Beispielsweise wird ein solcher Querträger so ausgebildet, daß er einen Profilabschnitt kleineren Querschnitts in Form eines Rohrprofils und einen Profilabschnitt größeren Querschnitts in Form eines Kastenprofils aufweist.

Eine derartige Querschnitts- bzw. Durchmessersänderung des Querträgers ist erforderlich, um die Eigenfrequenz des Querträgers so zu verschieben, daß Resonanzen des Querträgers über den gesamten Geschwindigkeitsbereich des Kraftfahrzeuges und damit Vibrationen, die sich insbesondere auf die Lenkeinrichtung übertragen können, vermieden oder in Grenzen gehalten werden.

Ein weiterer Grund dafür, daß solche Querträger mit nicht konstantem Querschnitt hergestellt werden, liegt darin, daß die Platzverhältnisse in der Instrumententafel aufgrund der in der Instrumententafel verlaufenden Verkabelung für die Instrumente und der Instrumente selbst mitunter beengt sind.

Derzeit werden Querträger mit Profilabschnitten unterschiedlichen Querschnitts dadurch hergestellt, daß der Profilabschnitt kleineren Querschnitts durch eine Innenhochdruckumformung auf den Querschnitt des Profilabschnitts größeren Querschnitts aufgeweitet wird. Je nach Profilform der Profilabschnitte, die unterschiedlich sein können, ist ein solches Verfahren, bei dem der Profilabschnitt kleineren Querschnitts auf den Querschnitt des Profilabschnitts größeren Querschnitts aufgeweitet wird, sehr kosten- und mitunter auch zeitaufwendig.

Eine andere Art eines Verfahrens zur Herstellung eines solchen Querträgers besteht darin, den Querschnittssprung zwischen den Profilabschnitten durch in Tiefziehverfahren hergestellte Ziehteile zu überbrücken, die zwischen die in Längsrichtung voneinander beabstandeten Profilabschnitte in Längsrichtung angeordnet und mit den beiden Profilabschnitten endseitig verbunden werden. Aber auch die Anfertigung von Ziehteilen ist zeit- und kostenaufwendig.

Der aus der eingangs genannten US-A-4 432 565 bekannte Querträger weist zwei in axialer Verlängerung angeordnete Profilabschnitte unterschiedlichen Querschnitts auf, und zwar einen Profilabschnitt in Form eines langerstreckten dünnen Rohres und einen Profilabschnitt größeren Querschnitts, der als Kastenprofil ausgebildet ist. Das dünne Rohr ist in ein Ende des Kastenprofils mit diesem überlappend eingeschoben, wobei das Kastenprofil an diesem Ende im Unterschied zum verbleibenden Abschnitt des Kastenprofils rohrförmig ausgebildet ist, und zwar mit einem Durchmesser, der dem Außendurchmesser des dünnen langerstreckten Rohres entspricht. Das Kastenprofil ist somit an der Verbindungsstelle mit dem dünnen Rohr durch eine entsprechende Formgebung an das dünne rohrförmige Profil angepaßt.

Ein ähnlicher Querträger ist aus der JP-A-08 183 478 bekannt, der wie der zuvor beschriebene bekannte Querträger einen Profilabschnitt in Form eines dünnen langerstreckten Rohres und einen Profilabschnitt größeren Querschnitts, der nicht als Kastenprofil, sondern als Rohr größeren Durchmessers ausgebildet ist, aufweist. Das Rohr größeren Durchmessers verjüngt sich an dem einen Ende, an dem es mit dem dünneren Rohr verbunden ist, im Querschnitt auf den Durchmesser des dünneren Rohrs.

Aus der US-A-5 295 708 ist ein Querträger mit einer Integrationsmöglichkeit für ein Airbagmodul für einen Kraftfahrzeugvordersitz bekannt, der zwei rohrförmige Elemente aufweist, die über ein dazwischenliegendes Teil miteinander verbunden sind, wobei das dazwischenliegende Teil eine nach oben offene Ausnehmung zur Aufnahme eines Bodenabschnitts des Airbagmoduls aufweist. Die beiden dünnen Rohre sind jeweils in ein Ende des Zwischenteils mit diesem überlappend eingeführt, wobei das Zwischenmodul an seinen beiden Enden an den Durchmesser der beiden Rohre angepaßt ist, während es im übrigen Bereich ein kasten förmiges Profil aufweist. Das Zwischenteil ist somit in den Querträger, der durch die beiden Rohre gebildet wird, integriert, wobei jeweilige Enden der Rohre zusätzlich an Stirnseiten des Zwischenteils befestigt sind.

Schließlich ist aus der DE-A-42 32 846 ein Querträger für das Armaturenbrett eines Kraftfahrzeuges bekannt, das aus drei Leichtmetall-Strangpreßteilen besteht, und zwar zwei Seitenteilen mit einem geschlossenen Kastenprofil und einem mit diesen verschweißten Mittelteil. Die beiden Seitenteile weisen wie das Mittelteil ein Kastenprofil auf, die jedoch hinsichtlich ihres Querschnitts aneinander angepaßt sind, so daß die beiden Seitenteile formschlüssig in die beiden Enden des Mittelteils eingeschoben und mit diesen verbunden werden.

Um bei der Entwicklung von Kraftfahrzeugkarosserien den für den jeweiligen Kraftfahrzeugtyp geeigneten Querträger mit den erforderlichen Eigenschaften durch Ausprobieren verschiedener Profilformen auffinden zu können, werden desweiteren üblicherweise Versuchsreihen gefahren, in denen eine Vielzahl von Querträgern unterschiedlichen Profils hergestellt werden müssen. Die herkömmlichen Verfahren zum Herstellen von Querträgern eignen sich jedoch aufgrund ihres hohen Kosten- bzw. Zeitaufwandes für derartige Versuchsreihen nicht.

Der Erfindung liegt daher die Aufgabe zugrunde, ein Verfahren sowie einen Querträger der eingangs genannten Art dahingehend weiterzubilden, daß der Querträger mit geringem Kosten- und geringem Zeitaufwand hergestellt werden kann.

Erfindungsgemäß wird diese Aufgabe hinsichtlich des eingangs genannten Verfahrens dadurch gelöst, daß die Profilabschnitte im Überlappungsbereich, in dem sich der Querschnitt des Profilabschnitts kleineren Querschnittes sprunghaft von dem Querschnitt des Profilabschnitts größeren Querschnitts unterscheidet, so daß im gesamten Überlappungsbereich der Außenumfang des Profilabschnitts kleineren Querschnitts von dem Innenumfang des Profilabschnitts größeren Querschnitts zumindest teilumfänglich beabstandet ist, durch zumindest ein starres Verbindungsteil in zumindest einer Richtung quer zur Längsrichtung miteinander verbunden werden, wobei das zumindest eine Verbindungsteil den Abstand zwischen dem Innenumfang und dem Außenumfang überbrückt.

Entsprechend wird diese Aufgabe hinsichtlich des eingangs genannten Querträgers dadurch gelöst, daß die Profilabschnitte im Überlappungsbereich, in dem sich der Querschnitt des Profilabschnitts kleineren Querschnittes sprunghaft von dem Querschnitt des Profilabschnitts größeren Querschnitts unterscheidet, so daß im gesamten Überlappungsbereich der Außenumfang des Profilabschnitts kleineren Querschnitts von dem Innenumfang des Profilabschnitts größeren Querschnitts zumindest teilumfänglich beabstandet ist, durch zumindest ein starres Verbindungsteil in zumindest einer Richtung quer zur Längsrichtung miteinander verbunden sind, wobei das zumindest eine Verbindungsteil den Abstand zwischen dem Innenumfang und dem Außenumfang überbrückt.

Das erfindungsgemäße Verfahren und der erfindungsgemäße Querträger unterscheiden sich von den bekannten Querträgern, bei denen der Querschnittssprung durch Umformverfahren überbrückt wird, dadurch, daß die beiden Profilabschnitte unterschiedlichen Querschnitts miteinander zumindest teilweise überlappt werden, und im Überlappungsbereich durch ein starres Verbindungsteil quer zur Längsrichtung miteinander verbunden werden. Mit diesem erfindungsgemäßen Herstellungsverfahren lassen sich vorteilhafterweise Querträger aus unterschiedlichsten Profilquerschnitten und Profilformen kostengünstig herstellen. Mit der erfindungsgemäßen Art, die Profilabschnitte miteinander zu verbinden, lassen sich beliebige sprunghafte Änderungen von Profilquerschnitten überbrücken. Das erfindungsgemäße Verfahren ist kostengünstig und zeitsparend, da auf die Herstellung von komplizierten Stanz- oder Ziehteilen verzichtet werden kann. Aufgrund des geringeren Kosten- und Zeitaufwandes eignet sich das erfindungsgemäße Verfahren insbesondere zur Herstellung einer Vielzahl von Querträgern unterschiedlicher Profilformen in einer Versuchsreihe. Durch die erfindungsgemäße Art der Verbindung der Profilabschnitte durch zumindest ein in zumindest einer Richtung quer zur Längsrichtung verlaufendes starres Verbindungsteil werden trotz der Vereinfachung des Herstellungsverfahrens und der Vereinfachung des Aufbaus des Querträgers Verluste in der Biegesteifigkeit des Querträgers vorteilhafterweise vermieden.

Somit wird die der Erfindung zugrundeliegende Aufgabe vollkommen gelöst.

In einer bevorzugten Ausgestaltung des Verfahrens wird der Profilabschnitt kleineren Querschnitts zumindest teilweise in den Profilabschnitt größeren Querschnitts eingeführt und anschließend mittels des zumindest einen Verbindungsteils mit dem Profilabschnitt größeren Querschnitts verbunden.

Hierbei ist von Vorteil, daß der erfindungsgemäße Querträger in Richtung quer zur Längsrichtung des Querträgers weiterhin möglichst kleinbauend ausgebildet werden kann, weil durch das Eintauchen des Profilabschnittes kleineren Querschnittes in den Profilabschnitt größeren Querschnitts der Profilabschnitt größeren Querschnitts die maximale Ausdehnung des Querträgers in Richtung quer zur Längsrichtung bestimmt.

In einer weiteren bevorzugten Ausgestaltung des Verfahrens sind die Profilabschnitte aus Stahl gefertigt, wobei dann die Profilabschnitte mittels zumindest eines Verbindungsteils in Form einer Spundwand, eines Stegbleches oder Profilteils miteinander verbunden werden, das mit den Profilabschnitten durch Schweißen, Löten, Kleben oder dgl. stoffschlüssig verbunden wird.

In diesem Fall, in dem die Profilabschnitte aus Stahl gefertigt sind, können die vorgenannten Verbindungsteile ebenfalls aus Stahl besonders kostengünstig durch Zuschneiden, Biegen, usw. als geometrisch einfache Teile hergestellt werden. Die Verwendung des gleichen Materials sowohl für die Profilabschnitte als auch für das oder die Verbindungsteile hat den Vorteil, daß sich die Verbindungsteile mit den Profilabschnitten durch Schweißen stoffschlüssig verbinden lassen.

In einer weiteren bevorzugten Ausgestaltung sind die Profilabschnitte aus einem Leichtmetall, insbesondere Aluminium, einer Aluminium- oder Magnesiumlegierung, gefertigt, wobei dann die Profilabschnitte mittels zumindest eines Verbindungsteils in Form eines Strangpreßprofils, einer Spundwand, eines Stegbleches oder Profilteils miteinander verbunden werden, das mit den Profilabschnitten durch Schweißen, Löten, Kleben oder dgl. stoffschlüssig verbunden wird.

Auch für den Fall, daß der Querträger in einer Leichtbauweise aus Leichtmetall, bspw. aus Aluminium gefertigt wird, läßt sich das erfindungsgemäße Verfahren vorteilhaft anwenden, indem das oder die Verbindungsteile ebenfalls aus Aluminium vorteilhafterweise in Form von kostengünstig herstellbaren und mit geeigneten Profilformen gestaltbaren Strangpreßprofilen ausgebildet sind, die für die biegesteife Verbindung zwischen den Profilabschnitten sorgen.

In einer weiteren bevorzugten Ausgestaltung wird in den Profilabschnitt größeren Querschnitts und/oder in den Profilabschnitt kleineren Querschnitts zumindest ein Schlitz eingebracht, in den das zumindest eine Verbindungsteil eingesetzt wird.

Hierbei ist von Vorteil, daß das Verbindungsteil, das gemäß der vorherigen bevorzugten Ausgestaltung zumindest teilweise in dem Hohlraum des Profilabschnittes größeren Querschnittes angeordnet wird, auf einfach zu handhabende Weise mit dem Profilabschnitt größeren Querschnitts verschweißt werden kann, da die Schweißnaht von außen im Bereich des Schlitzes bzw. der Schlitze angebracht werden kann.

In einer weiteren bevorzugten Ausgestaltung des so hergestellten Querträgers ist der Profilabschnitt kleineren Querschnitts ein Rohrprofil und der Profilabschnitt größeren Querschnitts ein Kastenprofil mit rechteckigem, trapezförmigem, dreieckigem oder ähnlichem Querschnitt.

Wie bereits zuvor erwähnt, lassen sich mit dem erfindungsgemäßen Verfahren kostengünstig beliebige Querträger herstellen, die zumindest zwei Profilabschnitte unterschiedlichen Querschnitts, d.h. unterschiedlicher Querschnittsform und/oder unterschiedlicher Querschnittsgröße, aufweisen. Es können somit mit geringem Kostenaufwand und ebenso geringem Zeitaufwand eine Serie von Querträgern für eine Testreihe zur Untersuchung der Eignung und Eigenschaften unterschiedlicher Profilformen hergestellt werden.

In einer weiteren bevorzugten Ausgestaltung des Querträgers ist zumindest ein Verbindungsteil als Manschette ausgebildet, die eine Öffnung aufweist, durch die das Rohrprofil durchgeführt ist, und deren Außenkontur an die Innenkontur des Kastenprofils angepaßt ist.

Bei dieser Ausgestaltung des Verbindungsteils ist besonders vorteilhaft, daß der Profilabschnitt kleineren Querschnitts, d.h. das Rohrprofil, in dem Profilabschnitt größeren Querschnitts, d.h. in dem Kastenprofil, allseitig eine Abstützung erfährt, wodurch eine besonders stabile, biegesteife Verbindung zwischen den beiden Profilabschnitten erzielt wird.

In einer weiteren bevorzugten Ausgestaltung des erfindungsgemäßen Querträgers ist zumindest ein Verbindungsteil als Rohrprofilstück ausgebildet, das mit einer Mantellinie mit dem Rohrprofil verbunden und mit zumindest einer weiteren Mantellinie mit dem Kastenprofil verbunden ist.

Diese Ausgestaltung des zumindest einen Verbindungsteils ist besonders vorteilhaft, weil das Rohrprofilstück aus dem Rohrprofil, das den Profilabschnitt kleineren Querschnitts bildet, und das als Meterware hergestellt werden kann, abgelängt werden kann, so daß auf die gesonderte Anfertigung von Verbindungsteilen gänzlich verzichtet werden kann. Auf diese Weise kann der Kostenaufwand bei der Herstellung des Querträgers minimiert werden. Auch mit dieser Ausgestaltung des Verbindungsteiles wird eine biegesteife Verbindung der beiden Profilabschnitte sicher erreicht.

In einer weiteren besonders bevorzugten Ausgestaltung des Verfahrens und des Querträgers ist der Profilabschnitt größeren Querschnitts zusammen mit dem zumindest einen Verbindungsteil als einstückiges Strangpreßprofil gefertigt bzw. wird der Profilabschnitt größeren Querschnitts in der vorgenannten Weise vor dem Verbinden mit dem Profilabschnitt kleineren Querschnitts als solches hergestellt.

Diese Ausgestaltung sowohl des Verfahrens als auch des Querträgers hat den weiteren besonderen Vorteil, daß das Herstellungsverfahren einerseits weiter vereinfacht wird, da ein Arbeitsschritt eingespart wird, nämlich das Verbinden des Verbindungsteils bzw. der Verbindungsteile mit dem Profilabschnitt größeren Querschnitts, und andererseits wird die Stabilität und mechanische Beständigkeit des Profilabschnitts größeren Querschnitts verbessert, da Sollbruchstellen wie Schweiß-, Löt-, Kleb- oder sonstige Verbindungsnähte im Falle des einstückigen Strangpreßprofils vermieden werden.

Weitere Vorteile und Merkmale ergeben sich aus der nachfolgenden Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausgewählte Ausführungsbeispiele, die einen Teil der möglichen Ausgestaltungsvarianten des erfindungsgemäßen Verfahrens und des erfindungsgemäßen Querträgers zeigen, sind in der Zeichnung dargestellt und werden hiernach mit Bezug auf die Figuren näher beschrieben. Es zeigen:
- Fig. 1: einen erfindungsgemäß hergestellten und ausgebildeten Querträger in einer perspektivischen schematischen Gesamtansicht;
- Fig. 2a) bis c): Darstellungen eines Ausschnittes eines Querträgers im Detail gemäß einem Ausführungsbeispiel, wobei Fig. 2a) eine perspektivische Ansicht, Fig. 2b) eine Seitenansicht und Fig. 2c) ein Schnitt entlang der Linie IIc-IIc in Fig. 2b) ist;
- Fig. 3a) bis c): Darstellungen eines Ausschnittes eines Querträgers im Detail gemäß einem weiteren Ausführungsbeispiel, wobei Fig. 3a) eine perspektivische Ansicht, Fig. 3b) eine Seitenansicht und Fig. 3c) ein Schnitt entlang der Linie IIIc-IIIc in Fig. 3b) ist;
- Fig. 4a) bis c): Darstellungen eines Ausschnittes eines Querträgers im Detail gemäß einem weiteren Ausführungsbeispiel, wobei Fig. 4a) eine perspektivische Darstellung, Fig. 4b) eine Seitenansicht und Fig. 4c) ein Schnitt entlang der Linie IVc-IVc in Fig. 4b) ist;
- Fig. 5a) und b): schematische Ansichten eines Ausschnitts eines Querträgers gemäß einem weiteren Ausführungsbeispiel, wobei Fig. 5a) eine Seitenansicht und Fig. 5b) ein Schnitt entlang der Linie Vb-Vb in Fig. 5a) ist;
- Fig. 6: eine perspektivische Darstellung eines Ausschnittes eines Querträgers gemäß einem weiteren Ausführungsbeispiel, wobei der Profilabschnitt größeren Querschnitts der Übersichtlichkeit halber weggelassen ist; und
- Fig. 7 bis 9: Fig. 2c), Fig. 3c) bzw. Fig. 4c) entsprechende Querschnittsdarstellungen von Querträgern gemäß weiteren Ausführungsbeispielen.

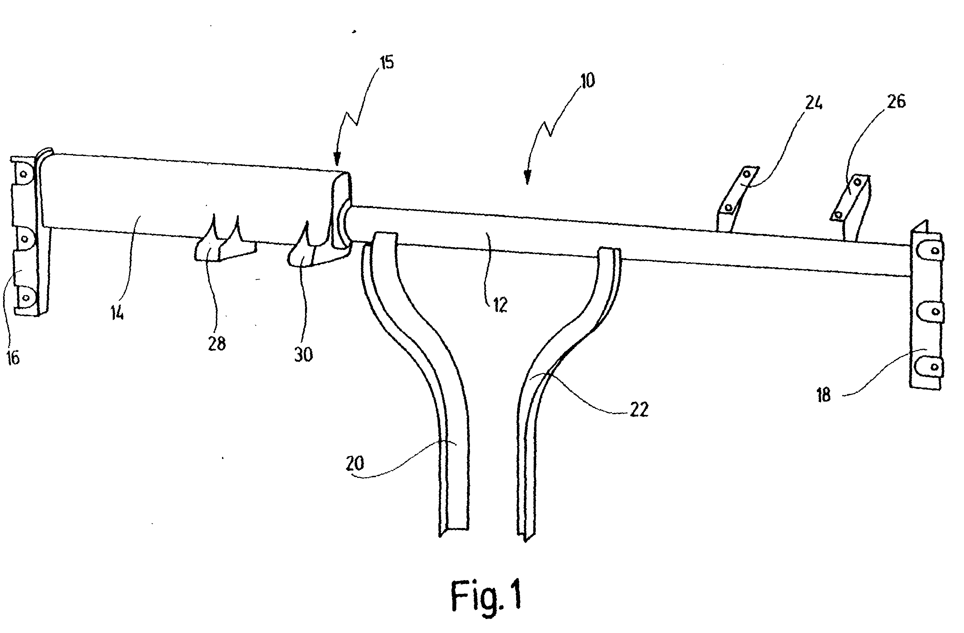

In Fig. 1 ist ein mit dem allgemeinen Bezugszeichen 10 versehener Querträger in einer perspektivischen Gesamtansicht dargestellt.

Der Querträger 10 dient in einem nicht dargestellten Kraftfahrzeug zur Aussteifung einer ebenfalls nicht dargestellten Instrumententafel. Der Querträger 10 ist Teil der Fahrzeugkarosserie und im Bereich unterhalb der Windschutzscheibe zwischen den vertikal verlaufenden A-Säulen angeordnet.

Der Querträger 10 weist einen ersten Profilabschnitt 12 und einen zweiten Profilabschnitt 14 auf. Der erste Profilabschnitt 12 wird aus einem Rohrprofil runden Querschnitts gebildet. Der zweite Profilabschnitt wird aus einem Kastenprofil gebildet, wobei der zweite Profilabschnitt 14, wie aus Fig. 1 hervorgeht, einen größeren Querschnitt aufweist als der erste Profilabschnitt 12. Der zweite Profilabschnitt 14 in Form des Kastenprofils ist ebenfalls als Hohlprofil ausgebildet. In einem Bereich 15 besteht ein Sprung bezüglich des Querschnitts des ersten Profilabschnittes 12 und des zweiten Profilabschnittes 14.

Die beiden Profilabschnitte 12 und 14 weisen im Ausführungsbeispiel jeweils für sich einen über ihre Länge im wesentlichen gleichmäßigen Querschnitt auf. Der erste Profilabschnitt 12 und der zweite Profilabschnitt 14 sind in Längsrichtung des Querträgers in axialer Verlängerung zueinander angeordnet.

Der Querträger 10 weist weiterhin Seitenhalter 16 und 18 auf, mit denen der Querträger 10 an den zuvor genannten A-Säulen des Fahrzeugrahmens befestigt wird. Ferner sind mittlere Halter 20 und 22 an dem Querträger 10 vorgesehen, die der Befestigung an einer Mittelkonsole (Tunnel) des Kraftfahrzeuges dienen. Weitere Halter 24 und 26 sind an dem Querträger 10 zur Befestigung eines Beifahrer-Airbags an dem Querträger 10 vorgesehen. Schließlich sind an dem zweiten Profilabschnitt 14 Halter 28 bzw. 30 befestigt, die zur Befestigung der Teile der Lenkeinrichtung des Kraftfahrzeuges dienen.

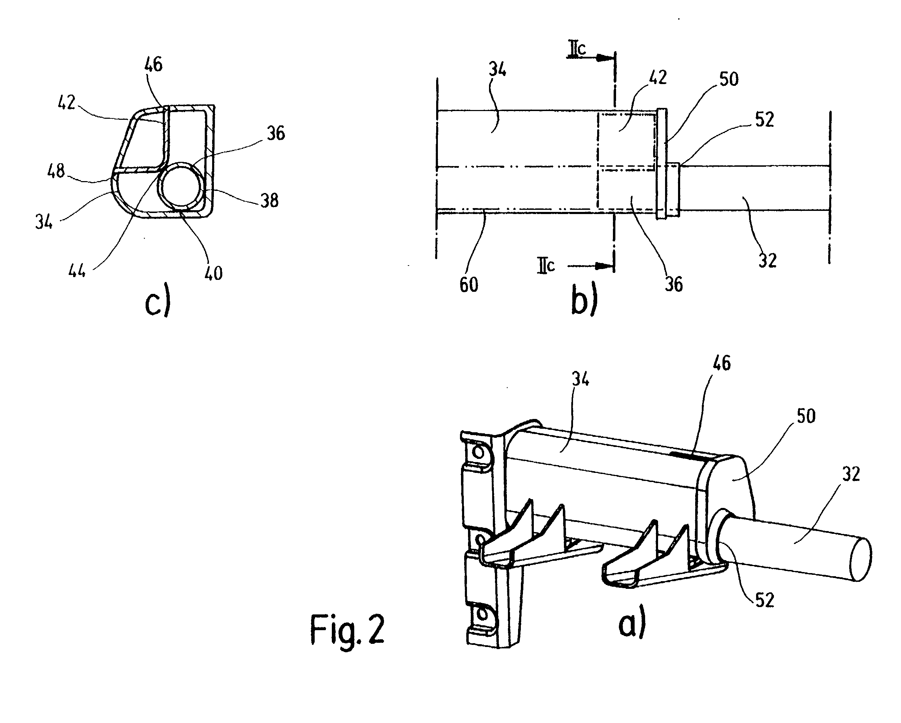

Wie hiernach noch näher beschrieben wird, sind der erste Profilabschnitt 12 kleineren Querschnitts und der zweite Profilabschnitt 14 größeren Querschnitts über zumindest eine Teillänge überlappend angeordnet. Der Überlappungsbereich kann sich über die gesamte Länge des zweiten Profilabschnitts 14 größeren Querschnitts erstrecken. Zumindest im Überlappungsbereich sind die Profilabschnitte 12 und 14 durch zumindest ein starres Verbindungsteil in zumindest einer Richtung quer zur Längsrichtung des Querträgers 10 miteinander verbunden, wie hiernach anhand der Ausführungsbeispiele gemäß Fig. 2 bis 9 näher erläutert wird.

In Fig. 2a) bis c) ist ein weiterer Querträger ausschnittsweise dargestellt, der einen ersten Profilabschnitt 32 kleineren Querschnitts und einen zweiten Profilabschnitt 34 größeren Querschnitts aufweist. Der erste Profilabschnitt 32 kleineren Querschnitts ist wiederum als Rohrprofil ausgebildet, während der zweite Profilabschnitt 34 größeren Querschnitts als Kastenprofil mit etwa trapezförmigem Querschnitt ausgebildet ist.

Der erste Profilabschnitt 32 kleineren Querschnitts ist mit einem Endabschnitt 36, der einstückig mit dem übrigen Teil des ersten Profilabschnitts 32 verbunden ist, in den zweiten Profilabschnitt 34 über eine Teillänge desselben eingeführt. In dem zweiten Profilabschnitt 34 ist der Endabschnitt 36 in einer Ecke positioniert, so daß der Endabschnitt 36 mit einer ersten Mantellinie 38 und einer zweiten Mantellinie 40 an der Innenseite des Profilabschnitts 34 anliegt. An den Mantellinien 38 bzw. 40 ist der Endabschnitt 36 mit dem zweiten Profilabschnitt 34 verschweißt. Zur Erleichterung des Anschweißens des Endabschnittes 36 an dem zweiten Profilabschnitt 34 kann im Bereich der Mantellinie 38 bzw. der Mantellinie 40 das Kastenprofil des zweiten Profilabschnittes 34 geschlitzt ausgeführt sein.

Der erste Profilabschnitt 32 ist mit dem zweiten Profilabschnitt 34 weiterhin über ein starres Verbindungsteil 42 hier in zwei Richtungen quer zur Längsrichtung des Profilabschnittes 32 bzw. des Profilabschnittes 34 verbunden.

Das Verbindungsteil 42 ist in Form eines zu einem Winkel gebogenen Stegbleches ausgebildet. An einer Berührungslinie 44 zwischen dem Verbindungsteil 42 und dem Endabschnitt 36 des ersten Profilabschnittes 32 sind beide Teile miteinander verschweißt. Endabschnitte des Verbindungsteils 42 sind in Schlitzen 46 und 48 des zweiten Profilabschnittes 34 eingesetzt und dort mit dem zweiten Profilabschnitt 34 verschweißt.

Ferner ist der zweite Profilabschnitt 34 an einer dem ersten Profilabschnitt 32 zugewandten Stirnseite durch einen ebenfalls zur biegesteifen Verbindung zwischen dem ersten Profilabschnitt 32 und dem zweiten Profilabschnitt 34 beitragenden Deckel 50 verschlossen. Der Deckel 50 ist als Manschette ausgebildet, die eine Öffnung 52 aufweist, durch die der Endabschnitt 36 des ersten Profilabschnittes 32 durchgeführt ist. Der Deckel 50 liegt an der Stirnseite des zweiten Profilabschnittes 34 an und kann mit diesem verschweißt sein, wobei zusätzlich in dem Deckel 50 innenseitig eine Rille zur Aufnahme der Stirnseite des zweiten Profilabschnittes 34 vorgesehen sein kann.

Um den ersten Profilabschnitt 32 mit dem zweiten Profilabschnitt 34 zu verbinden, wird zunächst das Verbindungsteil 42 an den Endabschnitt 36 des ersten Profilabschnittes 32 angeschweißt. Die Anordnung aus dem Endabschnitt 36 und dem damit verbundenen Verbindungsteil 42 wird dann in den zweiten Profilabschnitt 34 über die gewünschte Teillänge eingeschoben, wonach die freien Enden des Verbindungsteiles 42 mit dem zweiten Profilabschnitt 34 von außen durch die Schlitze 46 und 48 zusammengeschweißt werden können. Der Deckel 50, der vor dem Verbinden des Verbindungsteiles 42 mit dem Endabschnitt 36 auf den ersten Profilabschnitt 32 aufgeschoben wurde, kann danach mit der Stirnseite des zweiten Profilabschnittes 34 fest verbunden werden.

In diesem Ausführungsbeispiel sind der erste Profilabschnitt 32, der zweite Profilabschnitt 34 und das Verbindungsteil 42 aus Stahl gefertigt.

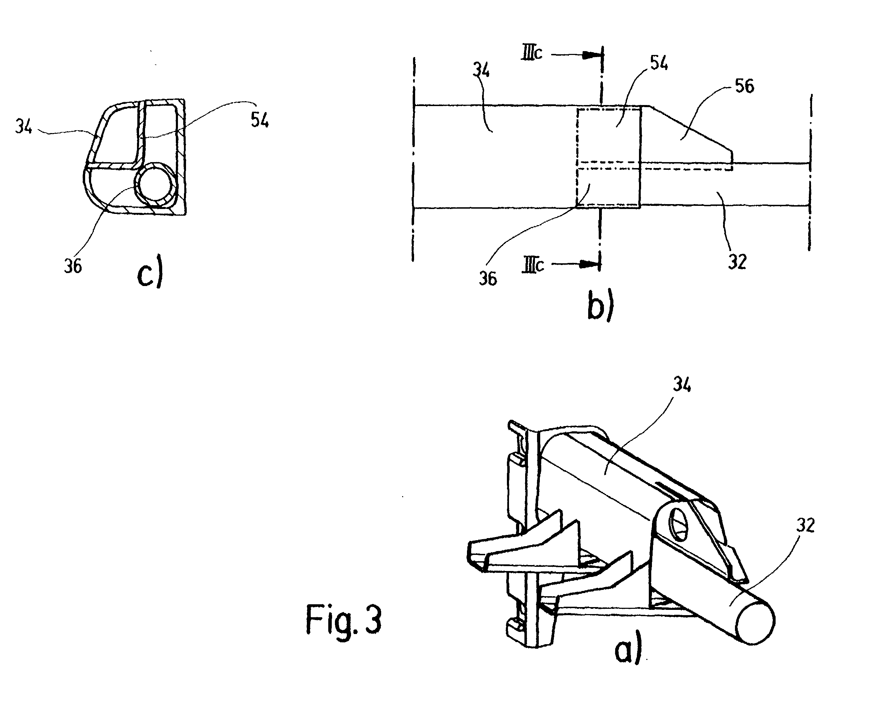

Das in Fig. 3a) bis c) dargestellte Ausführungsbeispiel ist gegenüber dem vorherigen Ausführungsbeispiel dahingehend abgewandelt, daß der erste Profilabschnitt 32 mit dem zweiten Profilabschnitt 34 über ein Verbindungsteil 54 verbunden ist, wobei sich das Verbindungsteil 54 nicht nur über den eigentlichen Überlappungsbereich zwischen dem Endabschnitt 36 des ersten Profilabschnittes 32 mit dem zweiten Profilabschnitt 34 erstreckt, sondern aus dem zweiten Profilabschnitt 34 herausragt. Ein Endabschnitt 56 des Verbindungsteiles 54 ist dabei sich nach außen verjüngend ausgebildet.

Dadurch, daß sich das Verbindungsteil 54 über einen längeren Teilbereich des ersten Profilabschnittes 32 erstreckt, wird die Biegesteifigkeit der Verbindung zwischen dem ersten Profilabschnitt 32 und dem zweiten Profilabschnitt 34 verbessert. Durch die Ausgestaltung des Verbindungsteiles 54 wird bei diesem Ausführungsbeispiel auf den Abschlußdeckel 50 gemäß Fig. 2 verzichtet.

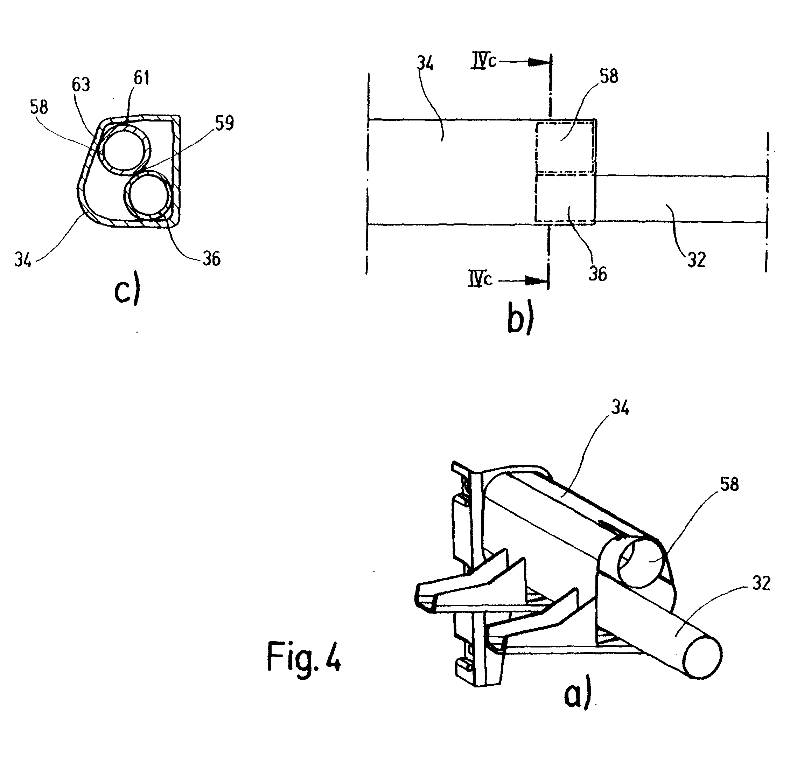

Eine weitere besonders günstige Abwandlung der beiden vorherigen Ausführungsbeispiele gemäß Fig. 2 und 3 ist in Fig. 4a) bis c) dargestellt. Bei diesem Ausführungsbeispiel wird die Verbindung zwischen dem ersten Profilabschnitt 32 und dem zweiten Profilabschnitt 34 über ein Verbindungsteil 58 in Form eines Rohrprofilstückes gebildet. Dieses Rohrprofilstück kann aus dem ersten Profilabschnitt 32, das bei der Herstellung eines Querträgers üblicherweise als Meterware hergestellt wird, abgelängt werden, so daß das Verbindungsteil 58 besonders kostengünstig hergestellt werden kann.

Wie in Fig. 2b) ferner mit doppelpunktiert unterbrochenen Linien dargestellt ist, kann der erste Profilabschnitt 32 auch mit einer größeren Überlappungslänge mit dem zweiten Profilabschnitt 34 in diesen eingeführt werden, um eine höhere Biegesteifigkeit zu erreichen. Dies kann ebenso in den Ausführungsbeispielen gemäß Fig. 3 und 4 vorgesehen werden. Ebenso können die Verbindungsteile 42 in Fig. 2, 54 in Fig. 3 und 58 in Fig. 4 länger ausgebildet sein, sich bspw. durch den gesamten zweiten Profilabschnitt 34 hindurch erstrecken, oder wie das Verbindungsstück 54 in Fig. 3 auf dem Profilabschnitt 32 auslaufen.

Das Verbindungsteil 58 in Form des Rohrprofilstückes ist mit dem Endabschnitt 36 des ersten Profilabschnittes an einer Mantellinie 59 und mit zwei weiteren Mantellinien 61 bzw. 63 mit der Innenseite des zweiten Profilabschnittes 34 verbunden.

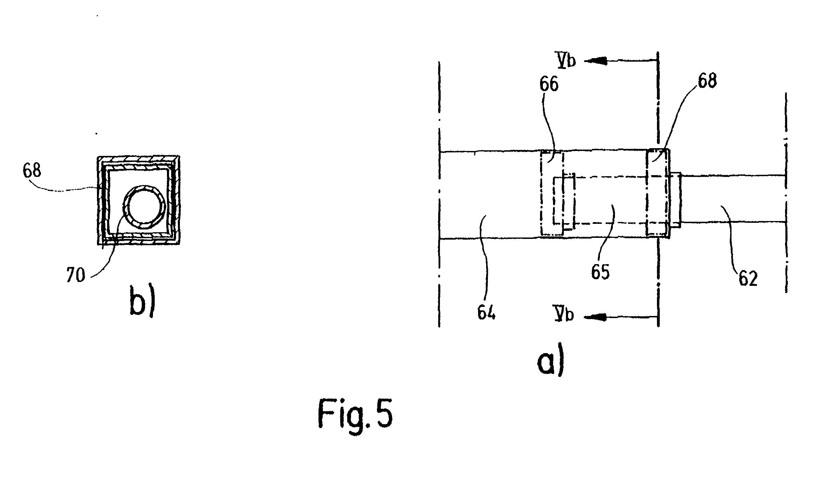

In Fig. 5a) und b) ist dargestellt, daß sich mit dem erfindungsgemäßen Verfahren auch ein erster Profilabschnitt 62 in Form eines Rohrprofils kleineren Querschnitts mit einem zweiten Profilabschnitt 64 in Form eines Rechteckprofils größeren Querschnitts biegesteif verbinden läßt.

Dazu ist ein Endabschnitt 65 des ersten Profilabschnittes 62 wiederum in den zweiten Profilabschnitt 64 eingeführt. Die Verbindung zwischen dem ersten Profilabschnitt 62 und dem zweiten Profilabschnitt 64 wird mittels Verbindungsteilen 66 und 68 bewerkstelligt, die in Form von Manschetten ausgebildet sind.

Diese Manschetten weisen eine durchgehende Öffnung 70 auf, durch die der Endabschnitt 65 des ersten Profilabschnittes 62 durchgeführt ist. Die Öffnung 70 ist an die Außenkontur des ersten Profilabschnittes 62 angepaßt. In dem gezeigten Ausführungsbeispiel ist die Öffnung 70 somit rund ausgebildet, so daß der Endabschnitt 65 formschlüssig in der Öffnung 70 anliegt und in dieser mit den Verbindungsteilen 66 und 68 stoffschlüssig verbunden ist.

Eine Außenkontur der Verbindungsteile 66 bzw. 68 ist dagegen an die Innenkontur des zweiten Profilabschnittes 64, die in dem gezeigten Ausführungsbeispiel rechteckig ist, angepaßt, so daß die Verbindungsteile 66 und 68 allseitig an der Innenwand des zweiten Profilabschnittes 64 anliegen und mit dieser bspw. durch Schweißen stoffschlüssig verbunden werden können.

Die Öffnung 70 kann in den Verbindungsteilen 66 und 68 so angeordnet sein, daß der erste Profilabschnitt 62 koaxial zur Längsmittelachse des zweiten Profilabschnittes 64 verläuft, die Öffnung kann jedoch auch so positioniert sein, daß eine exzentrische Anordnung zwischen dem ersten Profilabschnitt 62 und dem zweiten Profilabschnitt 64 ermöglicht wird, wie in Fig. 5b) dargestellt ist.

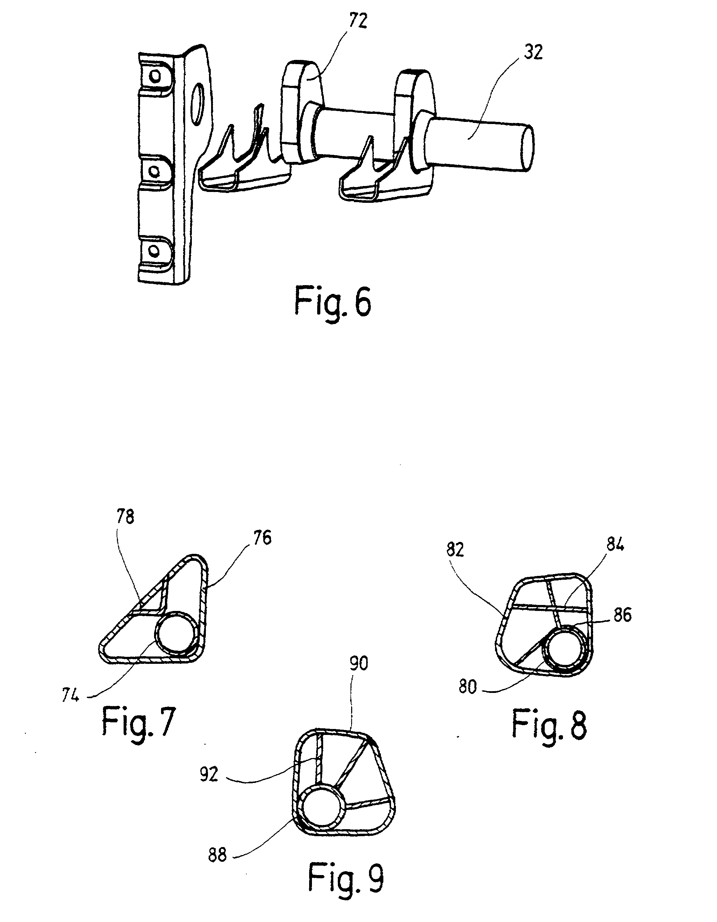

In Fig. 6 ist in weiterer Abwandlung zu den Ausführungsbeispielen gemäß Fig. 2 bis 4 dargestellt, daß auch der erste Profilabschnitt 32 in Form des Rohrprofils mit dem in Fig. 6 nicht dargestellten zweiten Profilabschnitt 34 in Form des trapezförmigen Kastenprofils über Verbindungsteile 72 in Form von Manschetten ähnlich zu dem Ausführungsbeispiel in Fig. 5 verbunden werden kann, wobei die Verbindungsteile 72 dementsprechend eine trapezförmige Außenkontur aufweisen, die der trapezförmigen Innenkontur des zweiten Profilabschnittes 34 entspricht.

In Fig. 7 bis 9 sind schließlich noch weitere Ausführungsbeispiele dargestellt, die mögliche Arten der Verbindung von Profilabschnitten unterschiedlichen Querschnitts, d.h. unterschiedlicher Querschnittsgröße und/oder unterschiedlicher Querschnittsform zur Herstellung von Querträgern zeigen.

In Fig. 7 ist ein erster Profilabschnitt 74 runden Querschnitts in Form eines Rohrprofils mit einem zweiten Profilabschnitt 76 dreieckigen Querschnitts in Form eines Kastenprofils über ein Verbindungsteil 78 in Form eines etwa rechtwinklig abgebogenen Stegbleches verbunden.

Fig. 8 zeigt ein Ausführungsbeispiel, das sich insbesondere zur Herstellung eines Querträgers aus einem Leichtmetall, wie Aluminium eignet. Ein erster Profilabschnitt 80 runden Querschnitts aus Aluminium ist mit einem zweiten Profilabschnitt 82 sich, wie bei den vorherigen Ausführungsbeispielen überlappend verbunden. Zur biegesteifen Verbindung des ersten Profilabschnittes 80 mit dem zweiten Profilabschnitt 82, der ebenfalls aus Aluminium gefertigt ist, wird ein Verbindungsteil 84 in Form eines Strangpreßprofiles verwendet. Das als Strangpreßprofil ausgebildete Verbindungsteil 84, das ebenfalls aus Aluminium gefertigt ist, weist einen zylindrischen Abschnitt 86 auf, der mit dem ersten Profilabschnitt 80 formschlüssig und stoffschlüssig verbunden ist. Das Verbindungsteil 84 weist ferner in mehreren Richtungen quer zur Längsrichtung der Profilabschnitte 80 und 84 verlaufende Stege auf, die eine biegesteife Verbindung auch im Falle der Fertigung des Querträgers aus Aluminium gewährleisten.

Besonders günstig ist es, wenn das Verbindungsteil 84 zusammen mit dem Profilabschnitt 82 in einem einzigen Fertigungsgang als Strangpreßprofil hergestellt wird, so daß dann lediglich noch die einstückige Anordnung aus dem Profilabschnitt 82 und dem Verbindungsteil 84, die also zusammen ein einziges Strangpreßprofil bilden, mit dem Profilabschnitt 80 verbunden werden muß.

Diese Vorgehensweise, nämlich das zumindest eine Verbindungsteil und den Profilabschnitt größeren Querschnitts einstückig als Strangpreßprofil herzustellen, läßt sich bei entsprechender Materialwahl natürlich auch auf die vorherigen Ausführungsbeispiele gemäß Fig. 1 bis 7 und bei dem nachfolgenden Ausführungsbeispiel gemäß Fig. 9 anwenden.

In Fig. 9 ist schließlich noch ein letztes Ausführungsbeispiel dargestellt, bei dem ein erster Profilabschnitt 88 mit einem zweiten Profilabschnitt 90 über mehrere Verbindungsteile 92 verbunden ist, die als einfache Spundwände ausgebildet sind und eine stabilisierende biegesteife Verstrebung zwischen dem ersten Profilabschnitt 88 und dem zweiten Profilabschnitt 90 bewirken. Diese Ausgestaltung der Verbindung zwischen dem ersten Profilabschnitt 88 und dem zweiten Profilabschnitt 90 eignet sich wiederum besonders bei Querträgern, die insgesamt aus Stahl gefertigt werden.

Die zuvor beschriebenen Ausführungsbeispiele zeigen nur einen kleinen Ausschnitt an Möglichkeiten, einen Querträger herzustellen, der über seine Länge unterschiedliche Profilquerschnitte aufweist. Mit dem erfindungsgemäßen Verfahren lassen sich Querträger aus Profilabschnitten beliebiger Querschnittsform und Querschnittsgröße kostengünstig herstellen, ohne daß ein nach dem erfindungsgemäßen Verfahren hergestellter Querträger Verluste bezüglich seiner Biegesteifigkeit erleidet.

## Patentansprüche

1. Verfahren zum Herstellen eines Querträgers (10) zur Aussteifung einer Instrumententafel eines Kraftfahrzeuges, wobei der herzustellende Querträger (10) zumindest zwei in axialer Verlängerung angeordnete Profilabschnitte (12, 14; 32, 34; 62, 64; 74, 76; 80, 82; 88, 90) unterschiedlichen Querschnitts aufweist, wobei der Profilabschnitt (12; 32; 62; 74; 80; 88) kleineren Querschnitts über zumindest eine Teillänge mit dem Profilabschnitt (14; 34; 64; 76; 82; 90) größeren Querschnitts überlappend angeordnet wird, **dadurch gekennzeichnet, daß** die Profilabschnitte (12, 14; 32, 34; 62, 64; 74, 76; 80, 82; 88, 90) im Überlappungsbereich, in dem sich der Querschnitt des Profilabschnitts (12; 32; 62; 74; 80; 88) kleineren Querschnittes sprunghaft von dem Querschnitt des Profilabschnitts (14; 34; 64; 76; 82; 90) größeren Querschnitts unterscheidet, so daß im gesamten Überlappungsbereich der Außenumfang des Profilabschnitts (12; 32; 62; 74; 80; 88) kleineren Querschnitts von dem Innenumfang des Profilabschnitts (14; 34; 64; 76; 82; 90) größeren Querschnitts zumindest teilumfänglich beabstandet ist, durch zumindest ein starres Verbindungsteil (42, 50; 54; 58; 66; 72; 78; 84; 92) in zumindest einer Richtung quer zur Längsrichtung des Querträgers (10) miteinander verbunden werden, wobei das zumindest eine Verbindungsteil (42, 50; 54; 58; 66; 72; 78; 84; 92) den Abstand zwischen dem Innenumfang und dem Außenumfang überbrückt.

2. Verfahren nach Anspruch 1, **dadurch gekennzeichnet, daß** der Profilabschnitt (12; 32; 62; 74; 80; 88) kleineren Querschnitts zumindest teilweise in den Profilabschnitt (14; 34; 64; 76; 82; 90) größeren Querschnitts eingeführt wird und anschließend mittels des zumindest einen Verbindungsteils (42; 54; 58; 66; 72; 78; 84; 92) mit dem Profilabschnitt (14; 34; 64; 76; 82; 90) größeren Querschnitts verbunden wird.

3. Verfahren nach Anspruch 1 oder 2, **dadurch gekennzeichnet, daß** die Profilabschnitte (12, 14; 32, 34; 62, 64; 74, 76; 88, 90) aus Stahl gefertigt sind, wobei dann die Profilabschnitte (12, 14; 32, 34; 62, 64; 74, 76; 88, 90) mittels zumindest eines Verbindungsteils (42; 54; 58; 66; 72; 78; 92) in Form einer Spundwand, eines Stegbleches oder Profilteiles miteinander verbunden werden, das mit den Profilabschnitten (12, 14; 32, 34; 62, 64; 74, 76; 88, 90) durch Schweißen, Löten, Kleben oder dergleichen stoffschlüssig verbunden wird.

4. Verfahren nach Anspruch 1 oder 2, **dadurch gekennzeichnet, daß** die Profilabschnitte (80, 82) aus einem Leichtmetall, insbesondere Aluminium, einer Aluminium- oder Magnesiumlegierung gefertigt sind, wobei dann die Profilabschnitte (80, 82) mittels zumindest eines Verbindungsteils (84) in Form eines Strangpreßprofils, einer Spundwand, eines Stegbleches oder Profilteils miteinander verbunden werden, das mit den Profilabschnitten (80, 82) durch Schweißen, Löten, Kleben oder dergleichen stoffschlüssig verbunden wird.

5. Verfahren nach Anspruch 3 oder 4, **dadurch gekennzeichnet, daß** in den Profilabschnitt (34) größeren Querschnitts und/oder in den Profilabschnitt (32) kleineren Querschnitts zumindest ein Schlitz (46, 48) eingebracht wird, in den das zumindest eine Verbindungsteil (42) eingesetzt wird.

6. Verfahren nach Anspruch 1 oder 2, **dadurch gekennzeichnet, daß** der Profilabschnitt (14; 34; 64; 76; 82; 90) größeren Querschnitts zusammen mit dem zumindest einen Verbindungsteil (42; 54; 58; 66; 72; 78; 84; 92) einstückig als Strangpreßprofil hergestellt wird.

7. Querträger (10) zur Aussteifung einer Instrumententafel eines Kraftfahrzeuges, mit zumindest zwei in axialer Verlängerung angeordneten Profilabschnitten (12, 14; 32, 34; 62, 64; 74, 76; 80, 82; 88, 90) voneinander unterschiedlichen Querschnitts, wobei der Profilabschnitt (12; 32; 62; 74; 80; 88) kleineren Querschnitts über zumindest eine Teillänge mit dem Profilabschnitt (14; 34; 64; 76; 82; 90) größeren Querschnitts überlappend angeordnet ist, **dadurch gekennzeichnet, daß** die Profilabschnitte (12, 14; 32, 34; 62, 64; 74, 76; 80, 82; 88, 90) zumindest im Überlappungsbereich, in dem sich der Querschnitt des Profilabschnitts (12; 32; 62; 74; 80; 88) kleineren Querschnittes sprunghaft von dem Querschnitt des Profilabschnitts (14; 34; 64; 76; 82; 90) größeren Querschnitts unterscheidet, so daß im gesamten Überlappungsbereich der Außenumfang des Profilabschnitts (12; 32; 62; 74; 80; 88) kleineren Querschnitts von dem Innenumfang des Profilabschnitts (14; 34; 64; 76; 82; 90) größeren Querschnitts zumindest teilumfänglich beabstandet ist, durch zumindest ein starres Verbindungsteil (42, 50; 54; 58; 66; 72; 78; 84; 92) in einer Richtung quer zur Längsrichtung miteinander verbunden sind, wobei das zumindest eine Verbindungsteil (42, 50; 54; 58; 66; 72; 78; 84; 92) den Abstand zwischen dem Innenumfang und dem Außenumfang überbrückt.

8. Querträger nach Anspruch 7, **dadurch gekennzeichnet, daß** der Profilabschnitt (12; 32; 62; 74; 80; 88) kleineren Querschnitts zumindest teilweise in den Profilabschnitt (14; 34; 64; 76; 82; 90) größeren Querschnitts eingeführt ist und anschließend mittels des zumindest einen Verbindungsteils (42; 54; 58; 66; 72; 78; 84; 92) mit dem Profilabschnitt (14; 34; 64; 76; 82; 90) größeren Querschnitts verbunden ist.

9. Querträger nach Anspruch 7 oder 8, **dadurch gekennzeichnet, daß** die Profilabschnitte (12, 14; 32, 34; 62, 64; 74, 76; 88, 90) aus Stahl gefertigt sind, wobei dann die Profilabschnitte (12, 14; 32, 34; 62, 64; 74, 76; 80, 82; 88, 90) mittels zumindest eines Verbindungsteils (42; 54; 58; 66; 72; 78; 92) in Form einer Spundwand, eines Stegbleches oder Profilteils miteinander verbunden sind, das mit den Profilabschnitten (12, 14; 32, 34; 62, 64; 74, 76; 88, 90) durch Schweißen oder dergleichen stoffschlüssig verbunden ist.

10. Querträger nach Anspruch 7 oder 8, **dadurch gekennzeichnet, daß** die Profilabschnitte (80, 82) aus einem Leichtmetall, insbesondere Aluminium, einer Aluminium- oder Magnesiumlegierung gefertigt sind, wobei dann die Profilabschnitte (80, 82) mittels zumindest eines Verbindungsteils (84) in Form eines Strangpreßprofils, einer Spundwand, eines Stegbleches oder Profilteils miteinander verbunden sind, das mit den Profilabschnitten (80, 82) durch Schweißen, Löten, Kleben oder dergleichen stoffschlüssig verbunden ist.

11. Querträger nach Anspruch 9 oder 10, **dadurch gekennzeichnet, daß** in dem Profilabschnitt (34) größeren Querschnitts und/oder in dem Profilabschnitt (32) kleineren Querschnitts zumindest ein Schlitz (46, 48) vorhanden ist, in dem das zumindest eine Verbindungsteil (42) eingesetzt ist.

12. Querträger nach einem der Ansprüche 7 bis 11, **dadurch gekennzeichnet, daß** der Profilabschnitt (12; 32; 62; 74; 80; 88) kleineren Querschnitts ein Rohrprofil und der Profilabschnitt (14; 34; 64; 76; 82; 90) größeren Querschnitts ein Kastenprofil mit rechteckigem, trapezförmigem, dreieckigem oder ähnlichem Querschnitt ist.

13. Querträger nach Anspruch 12, **dadurch gekennzeichnet, daß** zumindest ein Verbindungsteil (66, 68; 72) als Manschette ausgebildet ist, die eine Öffnung aufweist, durch die das Rohrprofil durchgeführt ist, und deren Außenkontur an die Innenkontur des Kastenprofils angepaßt ist.

14. Querträger nach Anspruch 12, **dadurch gekennzeichnet, daß** zumindest ein Verbindungsteil (58) als Rohrprofilstück ausgebildet ist, das mit einer Mantellinie (59) mit dem Rohrprofil verbunden und mit zumindest einer weiteren Mantellinie (61, 63) mit dem Kastenprofil verbunden ist.

15. Querträger nach einem der Ansprüche 7 bis 14, **dadurch gekennzeichnet, daß** der Profilabschnitt (14; 34; 64; 76; 82; 90) größeren Querschnitts zusammen mit dem zumindest einen Verbindungsteil (42; 54; 58; 66; 78; 84; 92) als einstückiges Strangpreßprofil gefertigt ist.

## Claims

1. A method for manufacturing a crossbeam (10) for stiffening an instrument panel of a motor vehicle, the crossbeam (10) that is to be manufactured having at least two profiled portions (12, 14; 32, 34; 62, 64; 74, 76; 80, 82; 88, 90), with cross sections differing from one another, arranged in axial prolongation, wherein the smaller-cross-section profiled portion (12; 32; 62; 74; 80; 88) is arranged so as to overlap with the larger-cross-section profiled portion (14; 34; 64; 76; 82; 90) over at least a partial length, **characterized in that** the profiled portions (12, 14; 32, 34; 62, 64; 74, 76; 80, 82; 88, 90), in the overlap region, in which the cross section of the smaller-cross-section profiled portion (12; 32; 62; 74; 80; 88) discontinuously differs from the cross section of the larger-cross-section profiled portion (14; 34; 64; 76; 82; 90) so that the outer circumference of the smaller-cross-section profiled portion (12; 32; 62; 74; 80; 88) is spaced apart from the inner circumference of the larger-cross-section profiled portion (14; 34; 64; 76; 82; 90) over at least a part of the circumference in the entire overlap region, are joined to one another in at least one direction perpendicular to the longitudinal direction of the crossbeam (10) by way of at least one rigid joining element (42; 54; 58; 66; 72; 78; 84; 92), wherein the at least one joining element (42, 50; 54; 58; 66; 72; 78; 84; 92) spans the distance between said inner circumference and said outer circumference.

2. The method of claim 1, **characterized in that** the smaller-cross-section profiled portion (12; 32; 62; 74; 80; 88) is introduced at least partially into the larger-cross-section profiled portion (14; 34; 64; 76; 82; 90), and is then joined to the larger-cross-section profiled portion (14; 34; 64; 76; 82; 90) by way of the at least one joining element (42; 54; 58; 66; 72; 78; 84; 92).

3. The method of claim 1 or 2, **characterized in that** the profiled portions (12, 14; 32, 34; 62, 64; 74, 76; 88, 90) are made from steel, the profiled portions (12, 14; 32, 34; 62, 64; 74, 76; 88, 90) then being joined to one another by way of at least one joining element (42; 54; 58; 66; 72; 78; 84; 92) in the form of a sheet piling, a web plate, or a profile element, that is joined in a substance uniting manner to the profiled portions (12, 14; 32, 34; 62, 64; 74, 76; 88, 90) by welding, soldering, adhesive bonding, or the like.

4. The method of claim 1 or 2, **characterized in that** the profiled portions (80, 82) are made from a lightweight metal, in particular aluminum or an aluminum or magnesium alloy, and the profiled portions (80; 82) are then joined to one another by way of at least one joining element (84) in the form of an extruded profile, a sheet piling, a web plate, or a profile element, that is joined in a substance uniting manner to the profiled portions (80, 82) by welding, soldering, adhesive bonding, or the like.

5. The method of claim 3 or 4, **characterized in that** at least one slot (46, 48), into which at least one joining element (42) is inserted, is introduced into the larger-cross-section profiled portion (34) and/or into the smaller-cross-section profiled portion (32).

6. The method of claim 1 or 2, **characterized in that** the larger-cross-section profiled portion (14; 34; 64; 76; 82; 90) is manufactured together with the at least one joining element (42; 54; 58; 66; 72; 78; 84; 92) in the form of an extruded profile in monolithic fashion.

7. A crossbeam (10) for stiffening an instrument panel of a motor vehicle, comprising at least two profiled portions (12, 14; 32, 34; 62, 64; 74, 76; 80, 82; 88, 90), with cross sections differing from one another, arranged in axial prolongation, wherein the smaller-cross-section profiled portion (12; 32; 62; 74; 80; 88) is arranged so as to overlap the larger-cross-section profiled portion (14; 34; 64; 76; 82; 90) over at least a partial length, characterized in that the profiled portions (12, 14; 32, 34; 62, 64; 74, 76; 80, 82; 88, 90), in the overlap region, in which the cross section of the smaller-cross-section profiled portion (12; 32; 62; 74; 80; 88) discontinuously differs from the cross section of the larger-cross-section profiled portion (14; 34; 64; 76; 82; 90) so that the outer circumference of the smaller-cross-section profiled portion (12; 32; 62; 74; 80; 88) is spaced apart from the inner circumference of the larger-cross-section profiled portion (14; 34; 64; 76; 82; 90) over at least a part of the circumference in the entire overlap region, are joined to one another in at least one direction perpendicular to the longitudinal direction of the crossbeam (10) by way of at least one rigid joining element (42; 54; 58; 66; 72; 78; 84; 92), wherein the at least one joining element (42, 50; 54; 58; 66; 72; 78; 84; 92) spans the distance between said inner circumference and said outer circumference in the overlap region.

8. The crossbeam of claim 7, **characterized in that** the smaller-cross-section profiled portion (12; 32; 62; 74; 80; 88) is introduced at least partially into the larger-cross-section profiled portion (14; 34; 64; 76; 82; 90), and is then joined to the larger-cross-section profiled portion (14; 34; 64; 76; 84; 90) by way of the at least one joining element (42; 54; 58; 66; 72; 78; 84; 92).

9. The crossbeam of claim 7 or 8, **characterized in that** the profiled portions (12, 14; 32, 34; 62, 64; 74, 76; 88, 90) are made from steel, the profiled portions (12, 14; 32, 34; 62, 64; 74, 76; 88, 90) then being joined to one another by way of at least one joining element (42; 54; 58; 66; 72; 78; 84; 92) in the form of a sheet piling, a web plate, or a profile element, that is joined in a substance uniting manner to the profiled portions (12, 14; 32, 34; 62, 64; 74, 76; 88, 90) by welding, soldering, adhesive bonding, or the like.

10. The crossbeam of claim 7 or 8, **characterized in that** the profiled portions (80, 82) are made from a lightweight metal, in particular aluminum or an aluminum or magnesium alloy, and the profiled portions (80; 82) are then joined to one another by way of at least one joining element (84) in the form of an extruded profile, a sheet piling, a web plate, or a profile element, that is joined in a substance uniting manner to the profiled portions (80, 82) by welding, soldering, adhesive bonding, or the like.

11. The crossbeam of claim 9 or 10, **characterized in that** at least one slot (46, 48), into which at least one joining element (42) is inserted, is introduced into the larger-cross-section profiled portion (34) and/or into the smaller-cross-section profiled portion (32).

12. The crossbeam of anyone of claims 6 through 10, **characterized in that** the smaller-cross-section profiled portion (12; 32; 62; 74; 80; 88) is a tubular profile, and the larger-cross-section profiled portion (14; 34; 64; 76; 82; 90) is a box profile with a rectangular, trapezoidal, triangular, or similar cross section.

13. The crossbeam of claim 12, **characterized in that** at least one joining element (66, 68; 72) is configured as a sleeve which has an opening through which the tubular profile is passed and whose outer contour is adapted to the inner contour of the box profile.

14. The crossbeam of claim 12, **characterized in that** at least one joining element (58) is configured as a tubular profiled piece that is joined with one surface line (59) to the tubular profile and joined with at least one further surface line (61, 63) to the box profile.

15. The crossbeam of anyone of claims 7 through 14, **characterized in that** the larger-cross-section profiled portion (14; 34; 64; 76; 82; 90) is manufactured together with the at least one joining element (42; 54; 58; 66; 78; 84; 92) in the form of an extruded profile in a monolithic fashion.

## Revendications

1. Procédé de fabrication d'une traverse (10) servant à renforcer un tableau de bord d'un véhicule, la traverse (10) à fabriquer présentant au moins deux tronçons de profilé (12, 14 ; 32, 34 ; 62, 64 ; 74, 76 ; 80, 82 ; 88, 90) disposés en prolongement axial, de section transversale différente, le tronçon de profilé (12 ; 32 ; 62 ; 74 ; 80 ; 88) de petite section, sur au moins une partie de la longueur, étant en recouvrement avec le tronçon de profilé (14 ; 34 ; 64 ; 76 ; 82 ; 90) de grande section, **caractérisé en ce que** les tronçons de profilé (12, 14 ; 32, 34 ; 62, 64 ; 74, 76 ; 80, 82 ; 88, 90), dans la zone de recouvrement, dans laquelle la section transversale du tronçon de profilé de petite section (12 ; 32 ; 62 ; 74 ; 80 ; 88) se différencie brusquement de la section transversale du tronçon de profilé de grande section (14 ; 34 ; 64 ; 76 ; 82 ; 90), de sorte que, dans l'ensemble. de la zone de recouvrement, la circonférence externe du tronçon de profilé de petite section (12 ; 32 ; 62 ; 74 ; 80 ; 88) accuse une certaine distance, sur au moins une partie de la circonférence, par rapport à la circonférence interne du tronçon de profilé de grande section (14 ; 34 ; 64 ; 76 ; 82 ; 90), sont reliés les uns aux autres, au moins dans une direction, perpendiculairement à la direction longitudinale de la traverse (10), par au moins un élément de liaison rigide (42, 50 ; 54 ; 58 ; 66 ; 72 ; 78 ; 84 ; 92), l'élément de liaison (42, 50 ; 54 ; 58 ; 66 ; 72 ; 78 ; 84 ; 92), au nombre minimum d'un, franchissant l'écart entre la circonférence interne et la circonférence externe.

2. Procédé selon la revendication 1, **caractérisé en ce que** le tronçon de profilé (12 ; 32 ; 62 ; 74 ; 80 ; 88) de petite section est introduit, au moins partiellement, dans le tronçon de profilé (14 ; 34 ; 64 ; 76 ; 82 ; 90) de grande section et est ensuite relié, au moyen de l'élément de liaison (42 ; 54 ; 58 ; 66 ; 72 ; 78 ; 84 ; 92), au nombre minimum d'un, avec le tronçon de profilé (14 ; 34 ; 64 ; 76 ; 82 ; 90) de grande section.

3. Procédé selon la revendication 1 ou 2, **caractérisé en ce que** les tronçons de profilé (12, 14 ; 32, 34 ; 62, 64 ; 74, 76 ; 88, 90) sont constitués en acier, les tronçons de profilé (12, 14 ; 32, 34 ; 62, 64 ; 74, 76 ; 88, 90) étant alors reliés les uns aux autres par au moins un élément de liaison (42 ; 54 ; 58 ; 66 ; 72 ; 78 ; 92), se présentant sous la forme d'un rideau de palplanches, d'une tôle en forme d'ailette ou d'une partie profilée, qui est relié aux tronçons de profilé (12, 14 ; 32, 34 ; 62, 64 ; 74, 76 ; 88, 90) par soudage, brasage, collage ou similaire, avec complémentarité des matières.

4. Procédé selon la revendication 1 ou 2, **caractérisé en ce que** les tronçons de profilé (80, 82) sont constitués en un métal léger, en particulier en aluminium, en alliage d'aluminium ou en alliage de magnésium, les tronçons de profilé (80, 82) étant alors reliés les uns aux autres par au moins un élément de liaison (84), se présentant sous la forme d'un profilé extrudé, d'un rideau de palplanches, d'une tôle en forme d'ailette ou d'une partie profilée, qui est relié aux tronçons de profilé (80, 82) par soudage, brasage, collage ou similaire, avec complémentarité des matières.

5. Procédé selon la revendication 3 ou 4, **caractérisé en ce qu'**est ménagée, dans le tronçon de profilé (34) de grande section et/ou dans le tronçon de profilé (32) de petite section, au moins une fente (46, 48), dans laquelle est inséré l'élément de liaison (42), au nombre minimum d'un.

6. Procédé selon la revendication 1 ou 2, **caractérisé en ce que** le tronçon de profilé (14 ; 34 ; 64 ; 76 ; 82 ; 90) de grande section est fabriqué en une seule pièce, sous forme de profilé extrudé, en même temps que l'élément de liaison (42 ; 54 ; 58 ; 66 ; 72 ; 78 ; 84 ; 92), au nombre minimum d'un.

7. Traverse (10) servant à renforcer un tableau de bord d'un véhicule, comprenant au moins deux tronçons de profilé (12, 14 ; 32, 34 ; 62, 64 ; 74, 76 ; 80, 82 ; 88, 90) disposés en prolongement axial, de section transversale différente, le tronçon de profilé (12 ; 32 ; 62 ; 74 ; 80 ; 88) de petite section, sur au moins une partie de la longueur, étant en recouvrement avec le tronçon de profilé (14 ; 34 ; 64 ; 76 ; 82 ; 90) de grande section, **caractérisée en ce que** les tronçons de profilé (12, 14 ; 32, 34 ; 62, 64 ; 74, 76 ; 80, 82 ; 88, 90), au moins dans la zone de recouvrement, dans laquelle la section transversale du tronçon de profilé (12 ; 32 ; 62 ; 74 ; 80 ; 88) de petite section se différencie brusquement de la section transversale du tronçon de profilé (14 ; 34 ; 64 ; 76 ; 82 ; 90) de grande section, de sorte que, dans l'ensemble de la zone de recouvrement, la circonférence externe du tronçon de profilé (12 ; 32 ; 62 ; 74 ; 80 ; 88) de petite section accuse une certaine distance, sur au moins une partie de la circonférence, par rapport à la circonférence interne du tronçon de profilé (14 ; 34 ; 64 ; 76 ; 82 ; 90) de grande section, sont reliés les uns aux autres, dans une direction perpendiculaire à la direction longitudinale, par au moins un élément de liaison rigide (42, 50 ; 54 ; 58 ; 66 ; 72 ; 78 ; 84 ; 92), l'élément de liaison (42, 50 ; 54 ; 58 ; 66 ; 72 ; 78 ; 84 ; 92), au nombre minimum d'un, franchissant l'écart entre la circonférence interne et la circonférence externe.

8. Traverse selon la revendication 7, **caractérisée en ce que** le tronçon de profilé (12 ; 32 ; 62 ; 74 ; 80 ; 88) de petite section est introduit, au moins partiellement, dans le tronçon de profilé (14 ; 34 ; 64 ; 76 ; 82 ; 90) de grande section et est ensuite relié, au moyen de l'élément de liaison (42 ; 54 ; 58 ; 66 ; 72 ; 78 ; 84 ; 92); au nombre minimum d'un, avec le tronçon de profilé (14 ; 34 ; 64 ; 76 ; 82 ; 90) de grande section.

9. Traverse selon la revendication 7 ou 8, **caractérisée en ce que** les tronçons de profilé (12, 14 ; 32, 34 ; 62, 64 ; 74, 76 ; 88, 90) sont constitués en acier, les tronçons de profilé (12, 14 ; 32, 34 ; 62, 64 ; 74, 76 ; 88, 90) étant alors reliés les uns aux autres par au moins un élément de liaison (42 ; 54 ; 58 ; 66 ; 72 ; 78 ; 92), se présentant sous la forme d'un rideau de palplanches, d'une tôle en forme d'ailette ou d'une partie profilée, qui est relié aux tronçons de profilé (12, 14 ; 32, 34 ; 62, 64 ; 74, 76 ; 88, 90) par soudage ou similaire, avec complémentarité des matières.

10. Traverse selon la revendication 7 ou 8, **caractérisée en ce que** les tronçons de profilé (80, 82) sont constitués en un métal léger, en particulier en aluminium, en alliage d'aluminium ou en alliage de magnésium, les tronçons de profilé (80, 82) étant alors reliés les uns aux autres par au moins un élément de liaison (84), se présentant sous la forme d'un profilé extrudé, d'un rideau de palplanches, d'une tôle en forme d'ailette ou d'une partie profilée, qui est relié aux tronçons de profilé (80, 82) par soudage, brasage, collage ou similaire, avec complémentarité des matières.

11. Traverse selon la revendication 9 ou 10, **caractérisée en ce qu'**est ménagée, dans le tronçon de profilé (34) de grande section et/ou dans le tronçon de profilé (32) de petite section, au moins une fente (46, 48), dans laquelle est inséré l'élément de liaison (42), au nombre minimum d'un.

12. Traverse selon l'une des revendications 7 à 11, **caractérisée en ce que** le tronçon de profilé (12 ; 32 ; 62 ; 74 ; 80 ; 88) de petite section est un profilé tubulaire et le tronçon de profilé (14 ; 34 ; 64 ; 76 ; 82 ; 90) de grande section est un profilé en forme de caisson de section rectangulaire, trapézoïdale, triangulaire ou similaire.

13. Traverse selon la revendication 12, **caractérisée en ce qu'**au moins un élément de liaison (66, 68 ; 72) est conformé en manchette, présentant une ouverture, à travers laquelle le profilé tubulaire est introduit, et dont le contour externe est adapté au contour interne du profilé en forme de caisson.

14. Traverse selon la revendication 12, **caractérisée en ce qu'**au moins un élément de liaison (58) est conformé en morceau de profilé tubulaire qui est relié au profilé tubulaire par une génératrice (59) et qui est relié au profilé en forme de caisson par au moins une autre génératrice (61, 63).

15. Traverse selon l'une des revendications 7 à 14, **caractérisée en ce que** le tronçon de profilé (14 ; 34 ; 64 ; 76 ; 82 ; 90) de grande section est fabriqué en une seule pièce, sous forme de profilé extrudé, en même temps que l'élément de liaison (42 ; 54 ; 58 ; 66 ; 72 ; 78 ; 84 ; 92), au nombre minimum d'un.
